# EUROPÄISCHE PATENTSCHRIFT

(11) **EP 1 217 330 B1**
(45) Veröffentlichungstag und Bekanntmachung des Hinweises auf die Patenterteilung: **26.04.2006**
(21) Anmeldenummer: 01128876.8
(22) Anmeldetag: 05.12.2001
(51) Int. Cl.: G01C 15/00

(54) **Lasernivellierer mit Schutzgehäuse**
Laser levelling device with protective housing
Dispositif de nivellement à laser avec boîtier de protection

(30) Priorität: 22.12.2000 DE 20021784 U
(43) Veröffentlichungstag der Anmeldung: 26.06.2002
(73) Patentinhaber: Stabila-Messgeräte Gustav Ullrich GmbH, 76855 Annweiler am Trifels (DE)
(72) Erfinder: Kallabis, Gabriel, Dipl.-Ing. FH, 76848 Spirkelbach (DE)
(74) Vertreter: Patentanwälte Möll und Bitterich

(56) Entgegenhaltungen:
- WO-A-97/07381
- DE-A- 19 648 867

## Beschreibung

Die Erfindung betrifft einen Lasernivellierer mit einem aus zwei Teilen bestehenden Gehäuse für die geschützte Aufbewahrung desselben gemäß dem Oberbegriff des Anspruchs 1.

Kleine handliche Lasernivellierer sind seit vielen Jahren handelsüblich. Sie besitzen im wesentlichen einen Gerätekörper, einen Laserstrahlerzeuger mit Optik, Libellen zum Nivellieren des Laserstrahls, einen festen Fuß, der üblicherweise mit dem Laserstrahl fluchtet, und wenigstens zwei höhenverstellbare Füße, mit deren Hilfe der Gerätekörper und damit der Laserstrahl nivelliert werden.

Diese Lasemivelliergeräte werden üblicherweise in Koffern ausgeliefert, in denen sie gegen Beschädigungen und Verschmutzung geschützt gelagert und transportiert werden können.

Da die Lasernivellierer häufig auf Messstativen montiert werden, ist am Gerätekörper wenigstens ein Stativgewinde vorgesehen. Andere Geräte besitzen zwei oder drei jeweils um 90° gegeneinander versetzte Stativgewinde. Diese Stativgewinde vergrößern nicht nur den Gerätekörper, sondern belasten ihn auch mechanisch mit der Folge, dass er sehr stabil ausgebildet werden muss. Dadurch wird das Lasernivelliergerät unnötig schwer und teuer. Das ist unbefriedigend.

Der vorliegenden Erfindung liegt daher die Aufgabe zugrunde, einen Lasernivellierer und ein für die geschützte Aufbewahrung desselben geeignetes Gehäuse anzugeben, welches so ausgestaltet ist, dass der Lasernivellierer besonders klein ausfallen kann, ohne dass seine Brauchbarkeit und Funktionalität dadurch eingeschränkt werden.

Diese Aufgabe wird gelöst durch die Kombination von Lasernivellierer und Gehäuse mit den Merkmalen des Anspruchs 1.

Dank der an der Innenseite des einen Gehäuseteils angeformten Aufnahmen für die Füße des Lasergerätes ist dieses während des Transports bereits gegen Verrutschen und gegen Beschädigung gesichert. Der wesentliche Vorteil der vorliegenden Erfindung ist jedoch in der Gestaltung des anderen Gehäuseteils begründet. Dieses trägt auf seiner Innenseite ein Stativgewinde, so dass das Lasergerät selbst kein Stativgewinde mehr benötigt. Nachdem das Gehäuseteil auf dem Stativ festgeschraubt ist, wird das Lasergerät mit seinen Füßen in die entsprechenden Vertiefungen gestellt, wo es fest und stabil steht und bequem bedient werden kann.

Damit erfüllt das Gehäuse nicht nur die bekannte Schutzfunktion, sondern übernimmt auch teilweise Funktionen des Lasernivellierers selbst.

Vorzugsweise werden die Füße und die Aufnahmen so ausgebildet, dass eine Rastverbindung entsteht. Damit steht das Lasergerät optimal sicher auf dem Gehäuseteil.

Gemäß einer vorteilhaften Ausgestaltung der Erfindung fluchtet das Stativgewinde mit der Aufnahme für den festen Fuß. Dadurch ist sichergestellt, dass beim Drehen von Gehäuseteil und Lasergerät kein störender Achsversatz auftritt.

Gemäß einer Weiterbildung der Erfindung besitzt wenigstens ein Gehäuseteil Einrichtungen, insbesondere in Form von Ösen oder Schlitzen, für eine Wandbefestigung. Dabei stört es nicht, wenn die Befestigung an der Wand nicht exakt waagerecht sein sollte, weil das auf dem Gehäuseteil stehende Lasergerät dank seiner höhenverstellbaren Füße und Libellen einjustiert werden kann.

Vorteilhafterweise besitzt ein Gehäuseteil an seiner Innenseite angeformte Aufnahmen, z. B. für ein Prisma, für Ersatzbatterien und dergleichen.

Gemäß einer Weiterbildung der Erfindung besitzt das andere Gehäuseteil an seiner Innenseite angeformte Halterungen, z. B. für das Prisma, die Ersatzbatterien und dergleichen.

Es versteht sich, dass während des Transports die Gehäuseteile sicher miteinander verbunden sein müssen. Gleichzeitig müssen die beiden Teile aber auch schnell lösbar sein. Beide Bedingungen werden optimal gelöst durch federnde Rastnasen und damit korrespondierende Rastnuten an den Gehäuseteilen.

Falls eine mehr einteilige Gehäuseform gewünscht wird, können die beiden Gehäuseteile mittels Scharnieren, insbesondere Filmschamieren, miteinander gelenkig verbunden werden. Alternativ ist auch eine Ausgestaltung möglich, bei der die beiden Gehäuseteile schubladenartig geschlossen werden.

Vorzugsweise sind die beiden Teile des Gehäuses aus Kunststoff hergestellt. Es versteht sich, dass dabei ein möglichst schlagfestes Material verwendet werden sollte. Damit lässt sich das Gehäuse so formen, dass es die Schutzfunktion optimal mit minimalem Materialaufwand verbindet.

Anhand der Zeichnung soll die Erfindung in Form eines Ausführungsbeispiels näher erläutert werden. Es zeigen jeweils als Schrägansicht
- Fig. 1: in Form eines Sprengbildes ein Lasernivelliergerät und sein zweiteiliges Schutz- und Transportgehäuse,
- Fig. 2: einen Blick in die Innenseite des Gehäuseoberteils der Fig. 1 und
- Fig. 3: das Gehäuseoberteil der Fig. 1 und 2 mit aufgesetztem Lasergerät.

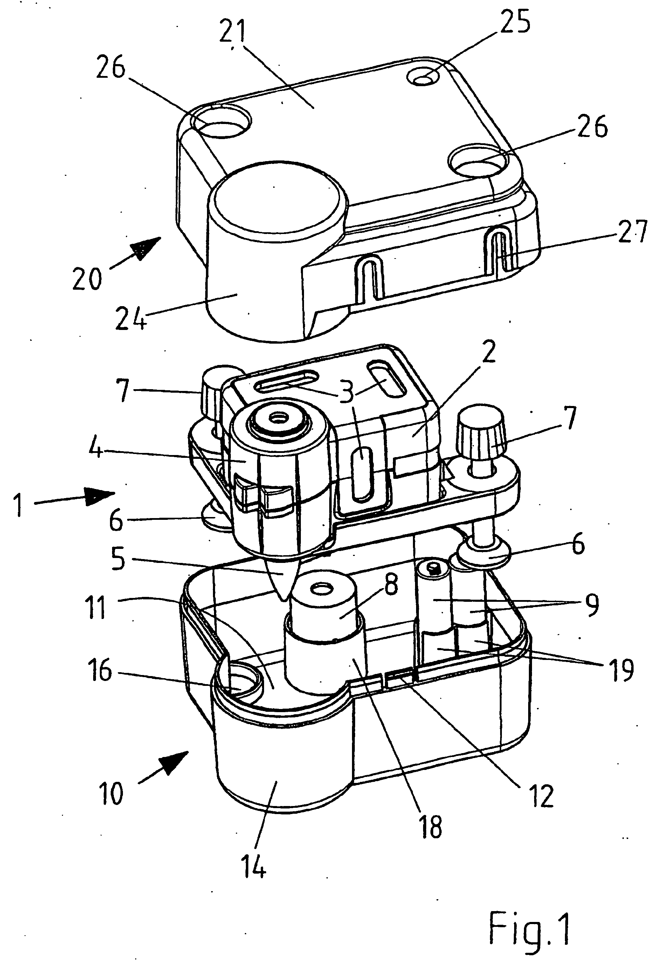

Fig. 1 zeigt in Form eines Sprengbildes ein Lasernivelliergerät 1 und ein aus Unterteil 10 und Oberteil 20 bestehendes Gehäuse für die geschützte Aufbewahrung des Lasergerätes 1.

Das Lasernivelliergerät 1 besitzt einen Gerätekörper 2, in dem Libellen 3 untergebracht sind, mit deren Hilfe das Lasernivelliergerät 1 horizontiert werden kann. Des weiteren ist vorgesehen ein Laserstrahlerzeuger 4 mit einer Optik. Das Nivellieren des Gerätes 2 erfolgt mit Hilfe dreier Füße 5, 6, von denen der mit dem Laserstrahlerzeuger 4 fluchtende Fuß 5 fest, die beiden anderen Füße 6 dank Gewindespindel 7 höhenverstellbar sind.

Das Gehäuseunterteil 10 besitzt einen Boden 11, an dessen Innenseite Aufnahmen für die Füße 5, 6 des Lasergerätes 1 angeformt sind. Sichtbar ist nur ein Teil einer Aufnahme 16.

Des weiteren erkennt man an der Innenseite des Gehäuseunterteils 10 eine angeformte Aufnahme 18 für ein Prisma 8 und angeformte Aufnahmen 19-für Ersatzbatterien 9.

Das Gehäuseunterteil 10 besitzt eine Ausformung 14, angepasst an den Laserstrahlerzeuger 4 des Lasernivelliergerätes 1. Damit umgibt das Gehäuse 10, 20 das Lasergerät 1 mit allseits minimalem jedoch ausreichendem Abstand. Das komplette Gerät ist somit sehr platzsparend.

Das Gehäuseoberteil 20 besitzt eine Decke 21, in deren Außenseite Vertiefungen 25, 26 eingeformt sind. Diese Vertiefungen 25, 26 korrespondieren mit den Füßen 5, 6 des Lasernivelliergerätes 1.

Schließlich erkennt man an der Rückseite des Gehäuseoberteils 20 Ösen oder Schlitze 27. Mit deren Hilfe kann das Gehäuseoberteil 20 an einer Wand oder dergleichen befestigt werden.

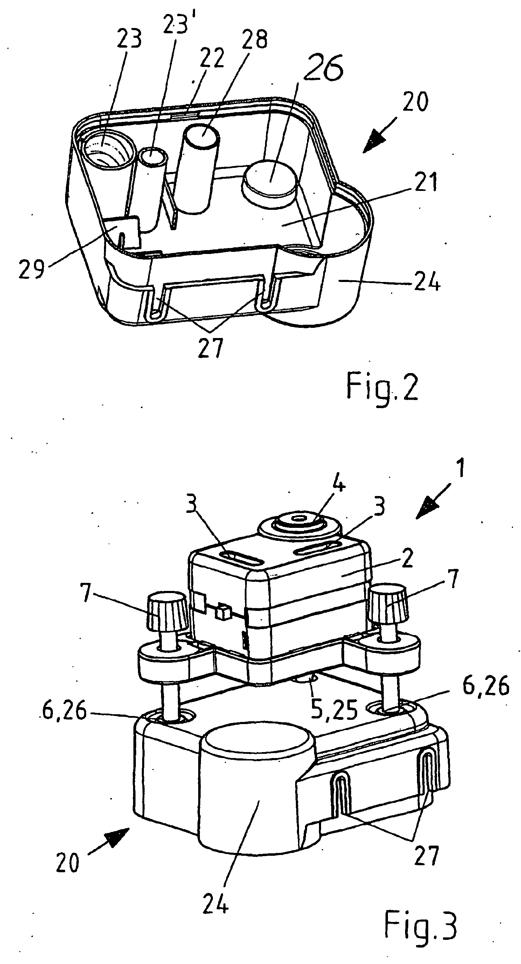

Fig. 2 zeigt einen Blick in das Innere des Gehäuseoberteils 20. An der Decke 21 ist zunächst ein Stativgewinde 23 angeformt, dessen Achse einerseits mit der Achse des festen Fußes 5 und damit mit der Achse des Laserstrahls, andererseits mit der Achse der in die Außenseite eingeformten Vertiefung 25 fluchtet. Es versteht sich, dass diese Einrichtungen sinngemäß auch am Gehäuseunterteil 10 vorgesehen sein können.

Weitere Anformungen sind ein zweites Stativgewinde 23', eine Halterung 28 für das im Gehäuseunterteil 10 untergebrachte Prisma 8 sowie eine Halterung 29 für die im Gehäuseunterteil 10 untergebrachten Ersatzbatterien 9.

Federnde Rastnasen 12 am Gehäuseunterteil 10 und damit korrespondierende Nuten 22 am Gehäuseoberteil 10 ermöglichen eine lösbare Verbindung der beiden Gehäuseteile 10, 20.

Fig. 3 schließlich zeigt das Gehäuseoberteil 20 und das Lasernivelliergerät 1 in der Gebrauchsposition. Die Füße 5, 6 des Lasernivelliergerätes 1 sitzen in den korrespondierenden Vertiefungen 25, 26 auf der Außenseite des Gehäuseoberteils 20. Sie können daher nicht verrutschen, so dass die Bedienung der höhenverstellbaren Füße 6, 7 und des Nivelliergerätes 1 selbst völlig problemlos ist.

## Patentansprüche

1. Lasernivellierer (1) mit einem aus zwei Teilen (10, 20) bestehenden Gehäuse für die geschützte Aufbewahrung desselben, wobei der Lasernivellierer (1) umfasst
- einen Gerätekörper (2),
- Libellen (3) zum Justieren,
- einen Laserstrahlerzeuger (4) mit Optik,
- einen festen Fuß (5)
- und zwei höhenverstellbare Füße (6,
**gekennzeichnet durch** die Merkmale:
- das eine Gehäuseteil (10) besitzt an der Innenseite seines Bodens (11) angeformte Aufnahmen (16) für die Füße (5, 6),
- das andere Gehäuseteil (20) besitzt
- in die Außenseite seiner Decke (21) eingeformte Aufnahmen (25, 26) für die Füße (5, 6)
- und an der Innenseite wenigstens ein Stativgewinde (23, 23').

2. Gehäuse nach Anspruch 1, **gekennzeichnet durch** das Merkmal:
- ein Stativgewinde (23) fluchtet mit der Aufnahme (25) für den festen Fuß (5).

3. Gehäuse nach Anspruch 1 oder 2, **gekennzeichnet durch** das Merkmal:
- die Füße (5, 6) rasten in die Aufnahmen (16, 25, 26) ein.

4. Gehäuse nach Anspruch 1, 2 oder 3, **gekennzeichnet durch** das Merkmal:
- wenigstens eines der Gehäuseteile (10, 20) besitzt Einrichtungen (27) für eine Wandbefestigung

5. Gehäuse nach Anspruch 4, **gekennzeichnet durch** das Merkmal:
- die Einrichtungen (27) sind als Ösen ausgebildet.

6. Gehäuse nach einem der Ansprüche 1 bis 5, **gekennzeichnet durch** das Merkmal:
- eines der Gehäuseteile (10, 20) besitzt an seiner Innenseite wenigstens eine angeformte Aufnahme (18, 19) und/oder angeformte Halterungen (28, 29), z. B. für ein Prisma (8), für Ersatzbatterien (9) und dergleichen.

7. Gehäuse nach einem der Ansprüche 1 bis 6, **gekennzeichnet durch** das Merkmal:
- federnde Rastnasen (12) und damit korrespondierende Rastnuten (22) verbinden beide Gehäuseteile (10, 20) lösbar.

8. Gehäuse nach einem der Ansprüche 1 bis 7, **gekennzeichnet durch** das Merkmal:
- ein Schamier, z. B. ein Filmscharnier, verbindet beide Gehäuseteile (10, 20) gelenkig.

9. Gehäuse nach einem der Ansprüche 1 bis 6, **gekennzeichnet durch** das Merkmal:
- die Gehäuseteile (10, 20) sind schubladenartig schließbar.

10. Gehäuse nach einem der Ansprüche 1 bis 9, **gekennzeichnet durch** das Merkmal :
- beide Gehäuseteile (10, 20) bestehen aus Kunststoff.

## Claims

1. A laser levelling device (1) with a housing consisting of two parts (10,20) for the protected storage thereof, wherein the laser levelling device (1) comprises
- an appliance body (2),
- spirit levels (3) for adjustment,
- a laser beam generator (4) with an optical system,
- a fixed foot (5)
- and two height-adjustable feet (6),
**characterised by** the features:
- one housing part (10) has integrally formed sockets (16) for the feet (5,6) on the inside of its base (11),
- the other housing part (20) has
- sockets (25,26) for the feet (5,6) formed in the outside of its cover (21)
- and on the inside at least one stand thread (23,23').

2. A housing according to Claim 1, **characterised by** the feature:
- a stand thread (23) is in alignment with the socket (25) for the fixed foot (5).

3. A housing according to Claim 1 or 2, **characterised by** the feature:
- the feet (5,6) engage in the sockets (16,25,26).

4. A housing according to Claim 1,2 or 3, **characterised by** the feature:
- at least one of the housing parts (10,20) has wall fastening means (27).

5. A housing according to Claim 4, **characterised by** the feature:
- the means (27) are in the form of eyes.

6. A housing according to any one of Claims 1 to 5,
**characterised by** the feature:
- one of the housing parts (10,20) has on its inside at least one integrally formed socket (18,19) and/or integrally formed mountings (28,29), for example for a prism (8), for spare batteries (9) and the like.

7. A housing according to any one of Claims 1 to 6,
**characterised by** the feature:
- resilient detent projections (12) and complementary detent slots (22) releasably join the two housing parts (10,20).

8. A housing according to any one of Claims 1 to 7,
**characterised by** the feature:
- a hinge, for example a film hinge, joins the two housing parts (10,20) in an articulated manner.

9. A housing according to any one of Claims 1 to 6,
**characterised by** the feature:
- the housing parts (10,20) can be closed in the manner of a drawer.

10. A housing according to any one of Claims 1 to 9,
**characterised by** the feature:
- both housing parts (10,20) consist of plastics material.

## Revendications

1. Dispositif de nivellement à laser (1) avec un boîtier en deux parties (10, 20) pour garder celui-ci protégé, le dispositif de nivellement à laser (1) comportant
- un corps d'appareil (2),
- des niveaux à bulle (3) pour le réglage,
- un générateur de faisceau laser (4) avec instrument optique,
- un pied (5) fixe,
- et deux pieds (6) réglables en hauteur,
**caractérisé en ce que** :
- une partie du boîtier (10) possède sur la face intérieure de son fond (11) des logements (16) moulés pour les pieds (5, 6),
- l'autre partie du boîtier (20) possède
- sur la face extérieure du dessus (21) des logements (25, 26) moulés pour les pieds (5,6)
- sur la face intérieure au moins un filetage de fixation sur pied (23, 23').

2. Boîtier selon la revendication 1, **caractérisé en ce que** :
- un filetage pour pied (23) est aligné avec le logement (25) destiné au pied fixe (5).

3. Boîtier selon la revendication 1 ou 2, **caractérisé en ce que** :
- les pieds (5, 6) s'emboîtent dans les logements (15, 25, 26).

4. Boîtier selon la revendication 1, 2 ou 3, **caractérisé en ce que** :
- au moins une des parties (10, 20) du boîtier possède des équipements (27) pour une fixation murale.

5. Boîtier selon la revendication 4, **caractérisé en ce que** :
- les équipements (27) sont conformés en oeillets.

6. Boîtier selon l'une des revendications 1 à 5,
**caractérisé en ce que** :
- une des parties (10, 20) du boîtier possède sur sa face intérieure au moins un logement (18, 19) moulé et/ou des fixations (28, 29) moulées, par exemple pour un prisme (8), pour des piles jetables (9) et similaires.

7. Boîtier selon l'une des revendications 1 à 6,
**caractérisé en ce que** :
- des ergots (12) d'emboîtement élastiques et des rainures (22) d'emboîtement correspondant aux précédents relient de manière amovible les deux parties (10, 20) de boîtier.

8. Boîtier selon l'une des revendications 1 à 7,
**caractérisé en ce que** :
- une charnière, par exemple une charnière mince relie par articulation les deux parties (10, 20) du boîtier.

9. Boîtier selon l'une des revendications 1 à 6,
**caractérisé en ce que** :
- les parties (10, 20) du boîtier se ferment à la manière d'un tiroir.

10. Boîtier selon l'une des revendications 1 à 9,
**caractérisé en ce que** :
- les deux parties (10, 20) du boîtier sont en plastique.
